# EUROPEAN PATENT APPLICATION

(11) **EP 1 046 846 A1**
(43) Date of publication of application: **25.10.2000**
(21) Application number: 99830230.1
(22) Date of filing: 20.04.1999
(51) Int. Cl.: F16K 27/04

(54) **Structure of pre-assembled mixer faucet**

(71) Applicant: Beccalossi Officine Meccaniche S.r.l., 25066 Lumezzane (Brescia) (IT)
(72) Inventor: Lazzari, Luigi, 25065 Lumezzane Pieve (Brescia) (IT)
(74) Representative: Manzoni, Alessandro

(57) **Abstract**

The invention regards a mixer faucet structure made up of a mixer valve (12) and an external body (13) with a water delivery outlet (13"), and where the mixer valve (12) is inserted into said external housing (13) with the interposition of an intermediate body (11) having sealing gaskets and inlet and outlet water passages.

## Description

The subject of the present invention is a pre-assembled mixer faucet structure to be later employed in the body of a faucet acting as its housing.

It is well known that when manufacturing faucets, whether they are single lever mixers or the traditional type, one of the biggest problems is to combine the aesthetic shape of the body of the faucet with the requirements and limitations of a constructional-operational nature which often prevent certain aesthetic shapes from being used because they are not feasible in that they do not allow the faucet to operate.

The aim of the present invention is to resolve the above indicated problem by using a pre-assembled mixer valve operating structure, to be correctly housed in the external body of the faucet.

Another aim of the invention is to propose a faucet structure in which the valve water delivery capacity and temperature control elements are placed in an intermediate body similar to a cartridge, which is then inserted into an external body which can be made of various different materials and have many different shapes.

These aims can be achieved using a structure as indicated in claim 1.
Greater details of the invention are anyway evident from the following detailed description made with reference to the attached indicative and non-limiting drawings, in which:
Fig.1 shows an exploded view of the elements which make up the pre-assembled structure;
Fig.2 is a longitudinal cross-section of the elements in Fig. 1 when assembled;
Fig. 3 is a longitudinal cross-section of a complete single lever mixer faucet; and
Fig. 4 shows a cross section through arrows IV-IV of Fig. 2.

The structure of the mixer faucet proposed here is made up in particular of an intermediate body 11 to house a cartridge type mixer valve 12 to be then inserted into a body or external housing 13.

The intermediate body 11, which may be made of any material, may be cylindrical or of another shape, with its external central section tapered 11'. Assembled around the body 11 are the gaskets, one at the top 14, two intermediate 15,16 one placed above and the other below the tapered section 11', and a bottom gasket 17 held by a base ring element 18. Said body 11 is hollow and delimits a housing 19 open at the top, provided with an internal threaded section 20, and dosed at the bottom 21 which has two through holes 23,24 for tubes 23',24' delivering hot and cold water plus a threaded blind hole 25 for anchoring a tie rod.

In the wall of the intermediate body 11, at the same height as the tapered intermediate section 11', just above the bottom 21 there is a radial slot 26 to allow the water to exit when it is fed laterally to the body. In the case of a shower mixer, the exit hole may be located in a different position or in the bottom of the body 11.

The mixer valve 12 is well-known and does not require a detailed description here. It is inserted into housing 19 in the intermediate body 11 and here held by a ring nut 27 screwed into the threaded section 20 inside the body itself.

The mixer valve 12 may, depending on the position of the water exit, either rest directly on the bottom of housing 19 or a base distributor adapter 12', as shown in the drawings, may be used. Whatever the case, there are two recesses 21' in the bottom 21 of the housing which are provided to receive two centring feet 12" positioned either at the bottom of the mixer valve or its base distributor-adapter 12'.
The mixer valve has also two inlet passages for hot and cold water matching holes 23,24 in the bottom of the intermediate body 11 and an exit water passage communicating with the radial slot 26 of the body itself.

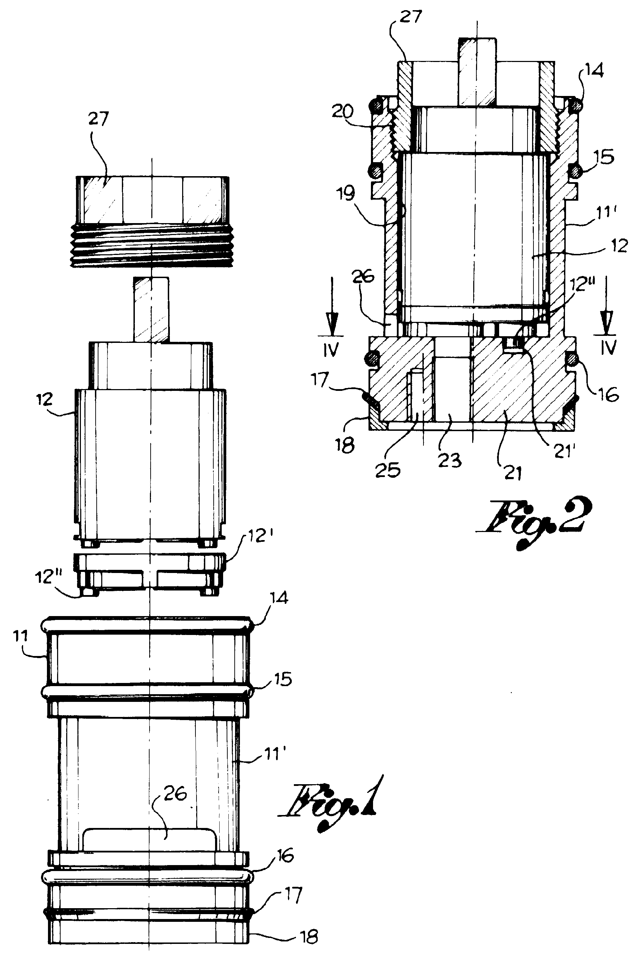

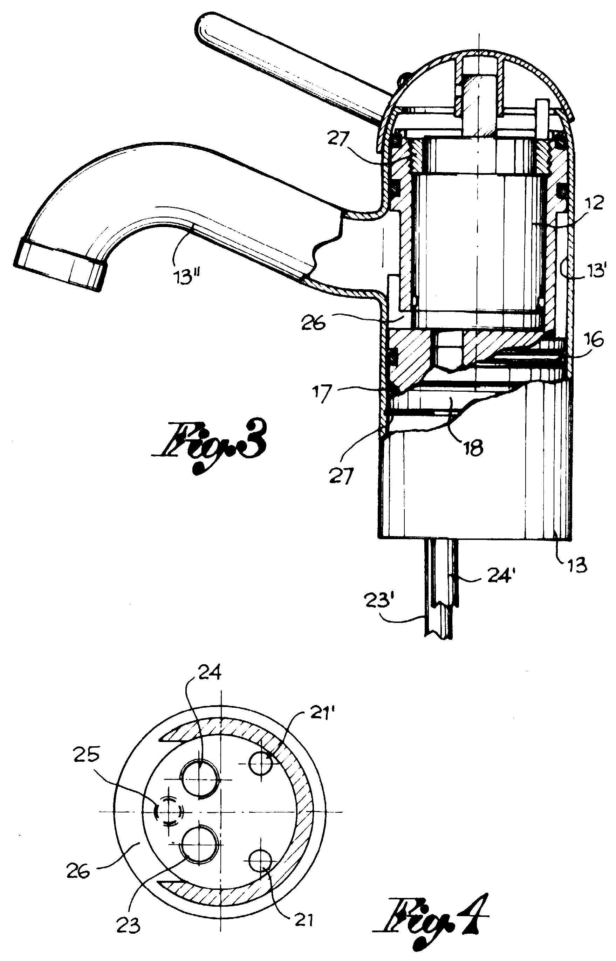

Practically, the mixer valve 12 is inserted and held in the intermediate body 11 and then the complete element is inserted like a cartridge into the external body 13 and held in this by a base ring nut (circlip) 27. The external body may be made out of any material and have whatever shape is required as long as it has a housing 13' suitable to receive the intermediate body complete with mixer valve 11,12 . see Fig. 3-.

The gaskets 14-17 around the intermediate body guarantee water tightness between this and the external body. The external body may even be fitted with a water delivery outlet 13" in communication with the radial water exit slot 26 of said intermediate body when the water is discharged to the side of the body.

## Claims

1. Mixer faucet structure comprising a mixer valve (12) and an external body (13) with a water delivery outlet (13"), **characterised** by the fact that the mixer valve (12) is inserted into said external housing (13) with the interposition of an intermediate body (11).

2. Structure of mixer faucet according to claim 1, where the mixer valve (12) is housed and held in said intermediate body (11) and where said intermediate body is housed and held sealed in said external body (13) with water delivery outlet.

3. Structure of mixer faucet according to claims 1 and 2, where said intermediate body (11) has:
- externally, a middle tapered section (11') and a series of ring gaskets (14,17) at different levels for sealing between the intermediate body itself and the external body of the faucet (13).;
- internally, an open top housing (19) having an internal threaded section (20), and a dosed bottom (21) complete with at least two through holes (23,24) for the hot and cold inlet tubes and a threaded blind hole for anchoring (25), and
- radially, a lateral slot (26) on a level with said tapered centre section (11') just above the bottom (21) of the housing, the mixer valve (12) being positioned and held in this housing by a ring nut (27) screwed into said threaded internal section (20) and having two inlet passages for the hot and cold water in line with said through holes in the bottom (23,24) and a water exit passage in communication with said lateral slot (26) which is in itself in communication with the delivery outlet of the external body (13).

4. Mixer faucet structure according to the previous claims, where the water output duct is placed in any lateral position or in the base of the intermediate body.
